(19) Europäisches Patentamt
European Patent Office
Office européen des brevets

(11) **EP 2 679 366 B1**

(12) **EUROPEAN PATENT SPECIFICATION**

(45) Date of publication and mention
of the grant of the patent:
**04.04.2018 Bulletin 2018/14**

(51) Int Cl.:
***B29B 11/16*** *(2006.01)*     ***B29B 11/12*** *(2006.01)*
***B29C 33/02*** *(2006.01)*

(21) Application number: **12749542.2**

(22) Date of filing: **14.02.2012**

(86) International application number:
**PCT/JP2012/053346**

(87) International publication number:
**WO 2012/114933 (30.08.2012 Gazette 2012/35)**

(54) **PREFORM FABRICATION METHOD**

VORFORMHERSTELLUNGSVERFAHREN

PROCÉDÉ DE FABRICATION DE PRÉFORMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2011 JP 2011038781**

(43) Date of publication of application:
**01.01.2014 Bulletin 2014/01**

(73) Proprietor: **Toray Industries, Inc.
Tokyo, 103-8666 (JP)**

(72) Inventors:
• **HINO Toyokazu
Nagoya-shi
Aichi 455-8502 (JP)**
• **YAMASAKI Masaaki
Nagoya-shi
Aichi 455-8502 (JP)**
• **KIBE Ryuzo
Nagoya-shi
Aichi 455-8502 (JP)**

(74) Representative: **Hoefer & Partner Patentanwälte
mbB
Pilgersheimer Straße 20
81543 München (DE)**

(56) References cited:
**JP-A- 4 339 608          JP-A- 2006 123 402
JP-A- 2006 123 402     JP-A- 2009 067 046
JP-A- 2009 119 701     US-A1- 2010 181 018**

## Description

<u>Technical Field of the Invention</u>

The present invention relates to a manufacturing method of preform to be used for RTM (Resin Transfer Molding) forming method, and specifically relates to a technology capable of minimizing the heat dissipation for heating to form the preform and improving the forming accuracy.

<u>Background Art of the Invention</u>

A conventional manufacturing method of a preform to be used for the RTM forming method comprises a series of processes as follows. (1) Layered reinforcing-fiber base materials are placed in a forming mold, and the forming mold is closed to form a shape. (2) The forming mold is heated or preheated, to make the base material hot enough to melt the fixing agent attaching to the base material. (3) The preform is cooled to solidify the fixing agent so as to fix the layers of the base material to each other while the forming mold maintains the formed shape. (4) The preform which has been formed into a shape is removed from the forming mold. In such a forming method of preforms, it is usual that metal molds are used and comprise a lower mold and an upper mold, either of which is provided with a heating means circulating heat medium or comprising an electric heater.

If the shape supposed to be made is comparatively simple, it is possible that the forming mold comprises only a lower mold and the layered base material is placed on the lower mold and is put in a bagging film, and the space between the film and the mold is vacuumed so as to press the base material through the film by atmospheric pressure to form a predetermined shape, as disclosed in Patent document 1. However, such a forming method using the film requires human hands so as to cause a low productivity and a high cost. For such a reason, both upper mold and lower mold are often used for the forming molds. Patent document 2 discloses upper and lower molds made of aluminum. For example, in order to form a complicated three-dimensional shape, Patent document 3 discloses a plurality of movable upper molds.

**Prior art documents**

**Patent documents**

Patent document 1: JP2006-123404-A
Patent document 2: JP2006-123402-A
Patent document 3: JP2009-119701-A

**Non-patent documents**

Non-patent document 1: Basic chemical engineering, edited by Society of Chemical Engineers, Japan, 1999

<u>Summary of the Invention</u>

<u>Problems to be solved by the Invention</u>

However, if the upper and lower molds both are made of metal, the following problems are expected. First, if the lower mold only is provided with the heating means, the heat dissipation toward the upper mold at the opposite side becomes greater, and therefore the lower mold must be heated excessively to keep the forming temperature constant. Consequently, energy saving is difficult because the heating requires much energy. Second, if the lower mold only is provided with the heating means and insulation material such as foaming material is provided to the upper mold, the dimension accuracy of the formed preform might decrease because the insulation material such as foaming material deforms in being pressed to form the shape. On the other hand, if the upper and lower molds both are provided with the heating means, it is difficult to make at least one of the molds a split mold in order to form a complicated shape.

Accordingly, focused on the above-described problems, an object of the present invention is to provide manufacturing apparatus and manufacturing method of preform, and preform manufactured by the method, wherein the energy saving can be achieved with low heat dissipation and high heating efficiency, and even a preform formed into a complicated shape can surely and easily be manufactured to be used for RTM (Resin Transfer Molding) forming method with a high dimension accuracy.

Means for solving the Problems

The above mentioned object is achieved by a method according to claim 1. To achieve the above-described object, a manufacturing apparatus of a preform according to the present invention is a manufacturing apparatus of a preform to be used for an RTM forming, wherein a layered body consisting of a plurality of layered reinforcing-fiber base materials to which a fixing agent consisting primarily of a thermoplastic resin is attached is formed into a predetermined shape as heated in a forming mold consisting of a first mold and a second mold which are facing to each other, characterized in that only the first mold is provided with a heating mechanism and a contact face of the second mold contacting the reinforcing-fiber base material is made of a material which is less thermally conductive than the first mold.

In the manufacturing apparatus of a preform according to the present invention, although the heating is performed only from the side of one mold (first mold) of the forming mold which is provided with the heating mechanism, the heat is less conducted to the other mold (second mold) and then is less dissipated from the second mold to the outside because the second mold is made of material less thermally conductive. As a result, the layered body which is placed in the forming mold and is made of reinforcing-fiber base materials to which the fixing agent consisting primarily of the thermoplastic resin is attached is efficiently heated to a predetermined temperature with less heat quantity. Saving energy is enabled by raising the heating efficiency. Further, the dimension accuracy in forming preforms can be improved since an insulation material which tends to deform is not necessary. Furthermore, because the other mold (second mold) having no heating is a split mold, complicated shapes can be formed with a high dimension accuracy.

The contact face is made of a material having a thermal conductivity which is equal to or more than 0.01 W/m·K and is equal to or less than 10W/m·K, and preferably, made of a material having a thermal conductivity which is equal to or less than 5W/m·K. It is preferable the thermal conductivity of a formation material of the second mold is low so as to achieve the above-described high heating efficiency and excellent energy saving. However, if the thermal conductivity of the contact face is too low to dissipate the heat from the inside of the forming mold which is closed and cooled in a process for solidifying the fixing agent, it might take much time to cool the preform. The contact face is made of a material having a thermal conductivity which is equal to or more than 0.01 W/m·K, and preferably, is equal to or more than 0.1W/m·K.

The formation material of the contact face is a nonmetallic material having a thickness of at least 5mm, and is preferably a material such as a resin which is less thermally conductive and thermally resistant from a viewpoint of the easy manufacturing. General-purpose resins such as epoxy resin (thermal conductivity: 0.2 - 0.4W/m·K), phenolic resin (thermal conductivity: 0.13 - 0.25W/m·K), Bakelite resin (thermal conductivity: 0.33 - 0.67W/m·K) and PTFE resin (approximately 0.25W/m·K) is used. Alternatively chemical wood (thermal conductivity: 0.1 - 1.8W/m·K) and heat-resistant board material (e.g. Lossna-board (made by Nikko Kasei Co., Ltd.) thermal conductivity: 0.24W/m·K) is used. Further, the formation material is required to have a heat resistance enough to resist the temperature at which the preform is formed as well as the temperature at which the thermoplastic resin as the fixing agent is melted.

Here, a thin nonmetallic material such as a film is not suitable as the formation material of the contact face. As described above, the forming process by using bagging films might require many human works, so as to decrease the productivity and increase the cost. Further, the formation might not be achieved at the second mold side. Furthermore, because thin materials are sensitive to the ambient temperature, the heat conducted from the first mold provided with the heat source might be dissipated. Therefore, the heat source should be provided even at the second mold side. It is preferable that the second mold has a thickness of at least 5mm.

In contrast, it is preferable that the first mold is made of a material having a comparatively high thermal conductivity capable of conducting the heat to the base material side, and is specifically made of metal. For example, aluminum (thermal conductivity: 204 - 230W/m·K), carbon steel (thermal conductivity: 36 - 53W/m·K), or chrome steel (thermal conductivity: 22 - 60W/m·K) may be used. However, the formation material of the first mold is not specifically limited to the examples described above.

As described above the second mold is not provided with the heating mechanism, and is a split mold. The split mold can be applied to the forming of a preform into a complicated shape.

The material of the reinforcing-fiber base material composing the layered body is not limited specifically, and may be carbon fiber base material, glass fiber base material, aramid fiber base material, or hybrid reinforcing-fiber base material consisting of them. Above all, the present invention is specifically effective in a case where the reinforcing-fiber base material is made of carbon fiber base material which requires the preform to be formed with a high dimension accuracy in the RTM forming method.

As to the reinforcing-fiber base material used in the manufacturing apparatus of a preform according to the present invention, it is preferable that the fixing agent has a glass transition temperature (Tg) of 50 - 80°C. If the Tg of the fixing agent is less than 50°C, the base materials might adhere to each other at the time of transportation of the base material so as to worsen the handling ability. In contrast, if Tg is more than 80°C, the forming temperature must be raised, so that particularly the second mold might have to be made of a special material having a high heat resistance.

It is preferable that the fixing agent attaching to the surface of the reinforcing-fiber base material primarily consists of a thermoplastic resin. The thermoplastic resin may be polyamide, polysulfone, polyetherimide, polyphenylene ether, polyimide, polyamide-imide or polyvinyl formal, and is not limited in particular. If the resin material primarily consists of thermoplastic resin, the productivity improves as improving the handling ability, when the resin material is sprayed on the reinforcing fiber fabric to be solidified and also when the layers are fixed after the reinforcing fiber fabric is layered and transformed into a three-dimensional shape. Besides, what the resin material primarily consists of is the element which has the greatest proportion and is called the primary constituent element. That doesn't mean to exclude an embodiment where the fixing agent contains a thermosetting resin such as epoxy resin and phenolic resin, and therefore, thermoplastic resin and/or thermosetting resin can be selected to be used properly.

A manufacturing method of a preform according to the present invention is a manufacturing method of preform to be used for an RTM forming, wherein a layered body consisting of a plurality of layered reinforcing-fiber base materials to which a fixing agent consisting primarily of a thermoplastic resin is attached is pressed with a forming mold consisting of a first mold and a second mold which are facing to each other so as to be formed into a predetermined shape as heated to melt the fixing agent interposed among the reinforcing-fiber base materials, and then cooled to solidify the fixing agent to make the reinforcing-fiber base materials adhere to each other to maintain the formed shape, characterized in that the heating is performed only from the first mold side and a contact face of the second mold contacting the reinforcing-fiber base material is made of a material which is less thermally conductive than the first mold so as to suppress the heat from being conducted to the second mold side.

Even in such a manufacturing method of a preform, the contact face is made of a material having a thermal conductivity which is equal to or more than 0.01W/m·K and is equal to or less than 10W/m·K, and more preferably, made of a material having a thermal conductivity which is equal to or less than 5W/m·K.

Also, the contact face is made of a nonmetallic material having a thickness of at least 5mm, as exemplified above. Further, the first mold is made of a metallic material as exemplified above. However for the above-described reason, the contact face is made of a material having a thermal conductivity which is equal to or more than 0.01W/m·K, and more preferably, is equal to or more than 0.1W/m·K.

Further, it is possible that the second mold which is not provided with a heating mechanism is a split mold, which can easily be applied to the forming of a complicated shape with a high dimension accuracy.

In the manufacturing method of a preform according to the present invention, it is possible that the cooling is performed while the layered body is pressed. If the cooling were performed while the pressing force were released, the fixing agent might be solidified in the released system and therefore the dimension accuracy of the preform might decrease. Otherwise, thus the cooling operation can be performed continuously after the forming operation is performed by heating, so that the production efficiency is improved through shortening the forming time.

Further, the present invention is specifically effective in a case where the reinforcing-fiber base material is made of carbon fiber base material, though the reinforcing-fiber base material is not limited in particular.

Even in the manufacturing method of a preform according to the present invention, it is preferable that the fixing agent has a glass transition temperature (Tg) of 50 - 80°C.

Furthermore, the present invention even provides a preform manufactured by the above-described method. The present invention makes it possible that a preform having a high dimension accuracy is manufactured efficiently with less thermal energy.

Effect according to the Invention

Thus, the present invention makes it possible that the base material is heated efficiently as suppressing the heat dissipation, so that the energy saving is achieved by improving the heating efficiency. Further, even in a case where a complicated shape is to be formed, a desirable preform used for the RTM forming method can be manufactured surely and easily with a high dimension accuracy and a high productivity.

Brief explanation of the drawings

[Fig. 1] Fig. 1 is a schematic cross section view of a manufacturing apparatus of a preform according to the present invention.
[Fig. 2] Fig. 2 is a schematic structural view of a test apparatus used in the examples and comparative examples of the present invention.
[Fig. 3] Fig. 3 is a schematic characteristic diagram showing a temperature distribution in the example of the present invention.

Embodiments for carrying out the Invention

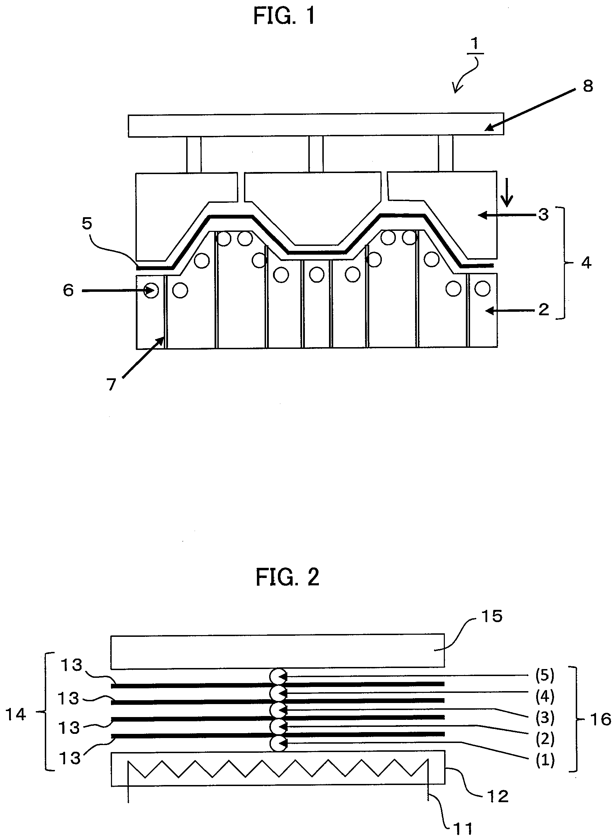

Hereinafter, embodiments of the present invention will be explained as referring to figures. Fig. 1 shows preform manufacturing apparatus 1 according to an embodiment of the present invention. In preform manufacturing apparatus 1, layered body 5 with a plurality of layered reinforcing-fiber base materials to which fixing agent consisting primarily of thermoplastic resin is attached is placed in forming mold 4 consisting of lower mold 2 as first mold and upper mold 3 as second mold which are facing to each other. Only lower mold 2 is provided with heating mechanism 6 as a flow passageway of heat medium in which hot water or heated oil circulates. In this embodiment, lower mold 2 is also provided with cooling means 7 of the air-cooling type or water-cooling type. The heating mechanism may be provided with a heater, other than the above-described mechanism in which the heat medium circulates. Cooling means 7 may cool a preform with compressed air flowing through through-holes toward the preform, and alternatively may circulate coolant water provided in a passageway inside lower mold 2. In this embodiment, upper mold 3 without heating mechanism 6 is configured as a split mold consisting of divided mold pieces. Upper mold 3 is coupled to pressing mechanism 8 which is capable of moving upper mold 3 with respect to lower mold 2 to open and close a set of molds and is capable of generating the pressing force to form layered body 5.

Layered body 5 is placed in forming mold 4, in which layered body 5 is formed into a predetermined shape by heating with lower mold 2 and pressing with upper mold 3 through pressing mechanism 8, so that a preform is manufactured to be used for the RTM forming method. Upper mold 3 of forming mold 4 is made of a material less thermally conductive than lower mold 2. More specifically, lower mold 2 may be made of metal, such as aluminum (thermal conductivity at 20°C: 228W/m·K), aluminum alloy and steel (thermal conductivity as pure iron at 20°C: 72.7W/m·K), while upper mold 3 may be made of a thermally-resistant resin such as phenolic resin (thermal conductivity at 20°C: 0.233W/m.K).

In preform manufacturing apparatus 1 to be used for the RTM forming, layered body 5 is formed into a predetermined shape by pressing between lower mold 2 and upper mold 3 of forming mold 4, while the fixing agent among the reinforcing-fiber base materials is melted by heating from the side of lower mold 2 with heating mechanism 6 and the melted fixing agent is solidified by cooling with cooling means 7 to fix the reinforcing-fiber base materials to each other to maintain the formed shape. The heating described above is performed only from the side of lower mold 2 provided with heating mechanism 6, and the heat is less conducted to upper mold 3 and then is less dissipated from upper mold 3 to the outside because upper mold 3 is made of material less thermally conductive than lower mold 2. As a result, being placed in forming mold 4, layered body 5 of the reinforcing-fiber base material to which the fixing agent consisting primarily of thermoplastic resin is attaching is heated efficiently with minimum quantity of heat, and then the base materials are fixed with the solidified fixing agent to each other. Thus the heating efficiency of heating mechanism 6 is increased and therefore the energy saving can be achieved by the reduction of energy to be consumed in forming shapes. Further, the dimension accuracy in forming preforms can be improved since the above-described insulation material which tends to deform is not necessary. Furthermore, because upper mold 3 having no heating mechanism 6 can be configured to a split mold as depicted, complicated shapes can be formed with a high dimension accuracy.

Fig. 2 shows a test apparatus used for studying effects of the present invention. Layered body 14 consisting of four carbon fiber fabric 13 is set on lower mold 12 which has been heated to 100°C and is provided with a heater as heating mechanism 11, and then after closing the mold with upper mold 15, temperature at each section is measured by thermocouples 16 [(1), (2), (3), (4), (5)] which locate among the carbon fiber fabrics 13 as well as at both sides of layered body 14. Here, upper mold 15 is not provided with a source of heat. In the example, lower mold 12 is made of aluminum and upper mold 15 is made of resin (chemical wood, thermal conductivity: 1.5W/m·K). In the comparative example, lower mold 12 is made of aluminum (thermal conductivity: 228W/m·K) and even upper mold 15 is made of aluminum. The mold is closed and then the temporal response of temperature at each section is measured. Table 1 shows results of the test.

[Table 1]

| Elapsed time from closing mold (s) | Temperature at each section (°C) | | | | | | | | | |
|---|---|---|---|---|---|---|---|---|---|---|
| | \<Examples\><br>Upper mold: Resin product<br>Lower mold: Aluminum product | | | | | \<Comparative Examples\><br>Upper mold: Aluminum product<br>Lower mold: Aluminum product | | | | |
| | (1) | (2) | (3) | (4) | (5) | (1) | (2) | (3) | (4) | (5) |
| 10 | 97.3 | 98.3 | 96.5 | 94.7 | 94.5 | 79.2 | 73.9 | 61.2 | 51.9 | 46.3 |
| 30 | 99.9 | 101.0 | 99.8 | 98.6 | 97.4 | 76.9 | 71.2 | 60.4 | 52.0 | 45.0 |
| 60 | 100.2 | 101.1 | 100.0 | 98.8 | 97.6 | 76.3 | 71.6 | 60.9 | 52.9 | 45.9 |

(continued)

| Elapsed time from closing mold (s) | Temperature at each section (°C) | | | | | | | | | |
| --- | --- | --- | --- | --- | --- | --- | --- | --- | --- | --- |
| | <Examples> Upper mold: Resin product Lower mold: Aluminum product | | | | | <Comparative Examples> Upper mold: Aluminum product Lower mold: Aluminum product | | | | |
| | (1) | (2) | (3) | (4) | (5) | (1) | (2) | (3) | (4) | (5) |
| 100 | 100.3 | 101.1 | 100.1 | 98.8 | 97.7 | 76.5 | 71.8 | 61.3 | 53.6 | 46.7 |
| 300 | 100.2 | 100.9 | 99.9 | 98.5 | 97.6 | 77.0 | 72.7 | 63.3 | 56.1 | 49.4 |
| 600 | 100.0 | 100.9 | 99.8 | 98.3 | 97.4 | 78.1 | 73.9 | 65.8 | 59.1 | 53.0 |

As shown in Table 1, even the temperature at section (5) which is the furthest from the source of heat arrives at 97.4°C in the example where the upper mold is made of resin. That result indicates that the heat given from the lower mold is not conducted to the less thermally conductive upper mold and is mostly consumed to heat the carbon fiber fabric. On the other hand, in the comparative example where the upper mold is made of thermally conductive aluminum, the temperature at section (5) which is the furthest from the source of heat only arrives at 53.0°C after 600 seconds and even the temperature at section (1) which is the closest to the source of heat only increases to 78.1°C. That result indicates that the heat given from the lower mold is dispersing to the upper mold side. The preform obtained in the example is the one with layers firmly fixed to each other. On the other hand, unmelted fixing agent doesn't fix the interval of the layers sufficiently in the comparative example. Therefore, the preform loses the shape during the transportation and cannot be used for the RTM forming.

Examples

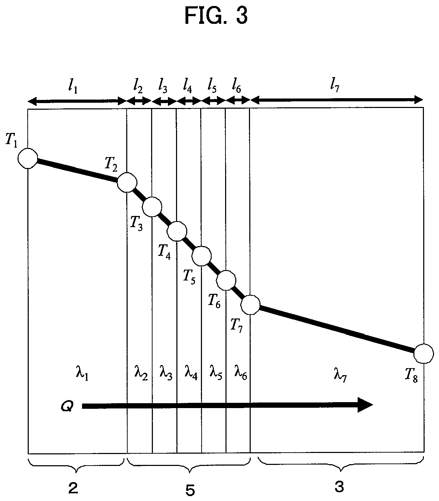

Fig. 3 is a schematic characteristic diagram showing a temperature distribution in the example of the present invention. Fig. 3 schematically describes the temperature at each section in a condition where layered body 5 (consisting of five layers) of the reinforcing-fiber base material is interposed between lower mold 2 as first mold and upper mold 3 as second mold and heat transfer Q is generated from lower mold 2 to upper mold 3. T ($T_1$ - $T_8$) indicates each temperature (°C) of contact face at each section, l ($l_1$ - $l_7$) indicates each thickness (m) of each layer, and λ ($\lambda_1$ - $\lambda_7$) indicates each thermal conductivity (W/m·K) of each material.

In Fig. 3, if it is assumed that lower mold 2, upper mold 3 and layers of layered body 5 are regarded as plane parallel plates coherent to each other, that the contact thermal resistance on the contact faces between the layers is ignored and that heat transfer Q is caused based on a steady heat conduction ($T_1$ is constant and $T_8$ is constant), transferred heat quantity q (W/m$^2$) can be expressed by the following formula.

[Formula 1]

$$q = \frac{(T_1 - T_8)}{\sum\limits_{n=1}^{8} \dfrac{l_n}{\lambda_n}}$$

Here, T2 to T7 can be expressed by the following formulas (where $2 \leq i \leq 7$).

[Formula 2]

$$T_i = T_1 - \left( \sum_{n=2}^{i} \frac{l_n}{\lambda_n} \right) q$$

Tables 2 to 5 show results of $T_2$ to $T_7$ calculated by assuming that $T_1$ is 100°C and $T_8$ is 100°C, with respect to pitch-based carbon fiber (made by Cytec Industries, Inc., Theonel K-1000, $\lambda_2$ - $\lambda_6$ = 1000W/m·K), PAN-based carbon fiber (made by Toray Industries, Inc., Torayca T300, $\lambda_2$ - $\lambda_6$ = 6.5W/m·K), and glass fiber (made by Nitto Boseki Co., Ltd, E-glass series, $\lambda_2$ - $\lambda_6$ = 1.03W/m·K).
Here assumed $l_1$ = 0.02m, $l_2$ - $l_6$ = 0.0015m, and $l_7$ = 0.1m.

Table 2 shows calculation results of a case where lower mold 2 is made of aluminum ($\lambda_1$ = 228W/m·K) and upper mold 3 is made of aluminum ($\lambda_7$ = 228W/m·K).

[Table 2]

| | $T_1$ (°C) | $T_2$ (°C) | $T_3$ (°C) | $T_4$ (°C) | $T_5$ (°C) | $T_6$ (°C) | $T_7$ (°C) | $T_8$ (°C) |
|---|---|---|---|---|---|---|---|---|
| Pitch-based carbon fiber ($\lambda_{2-6}$=1000W/m·K) | 100.0 | 99.9 | 87.5 | 87.3 | 87.0 | 86.8 | 86.6 | 25.0 |
| PAN-based carbon fiber ($\lambda_{2-6}$=6.5W/m·K) | 100.0 | 99.9 | 85.8 | 75.5 | 65.2 | 54.9 | 44.6 | 25.0 |
| Glass fiber ($\lambda_{2-6}$=1.03W/m·K) | 100.0 | 99.9 | 85.2 | 71.2 | 57.2 | 43.2 | 29.2 | 25.0 |

Table 3 shows calculation results of a case where lower mold 2 is made of aluminum ($\lambda_1$ = 228W/m·K) and upper mold 3 is made of resin ($\lambda_7$ = 1.5W/m·K).

[Table 3]

| | $T_1$ (°C) | $T_2$ (°C) | $T_3$ (°C) | $T_4$ (°C) | $T_5$ (°C) | $T_6$ (°C) | $T_7$ (°C) | $T_8$ (°C) |
|---|---|---|---|---|---|---|---|---|
| Pitch-based carbon fiber ($\lambda_{2-6}$=1000W/m·K) | 100.0 | 99.9 | 99.9 | 99.9 | 99.9 | 99.9 | 99.9 | 25.0 |
| PAN-based carbon fiber ($\lambda_{2-6}$=6.5 W/m·K) | 100.0 | 99.9 | 99.6 | 99.4 | 99.1 | 98.9 | 98.6 | 25.0 |
| Glass fiber ($\lambda_{2-6}$=1.03W /m·K) | 100.0 | 99.9 | 98.4 | 97.0 | 95.5 | 94.0 | 92.5 | 25.0 |

Table 4 shows calculation results of a case where lower mold 2 is made of carbon steel ($\lambda_1$ = 45W/m·K) and upper mold 3 is made of carbon steel ($\lambda_7$ = 45W/m.K).

[Table 4]

| | $T_1$ (°C) | $T_2$ (°C) | $T_3$ (°C) | $T_4$ (°C) | $T_5$ (°C) | $T_6$ (°C) | $T_7$ (°C) | $T_8$ (°C) |
|---|---|---|---|---|---|---|---|---|
| Pitch-based carbon fiber ($\lambda_{2-6}$=1000W/m·K) | 100.0 | 99.5 | 87.5 | 87.5 | 87.4 | 87.4 | 87.3 | 25.0 |
| PAN-based carbon fiber ($\lambda_{2-6}$=6.5W /m· K) | 100.0 | 99.5 | 86.7 | 82.2 | 77.7 | 73.2 | 68.6 | 25.0 |
| Glass fiber ($\lambda_{2-6}$=1.03W/m·K) | 100.0 | 99.6 | 85.7 | 74.7 | 63.7 | 52.7 | 41.8 | 25.0 |

Table 5 shows calculation results of a case where lower mold 2 is made of carbon steel ($\lambda_1$ = 45W/m·K) and upper mold 3 is made of resin ($\lambda_7$ = 1.5W/m·K).

[Table 5]

| | $T_1$ (°C) | $T_2$ (°C) | $T_3$ (°C) | $T_4$ (°C) | $T_5$ (°C) | $T_6$ (°C) | $T_7$ (°C) | $T_8$ (°C) |
|---|---|---|---|---|---|---|---|---|
| Pitch-based carbon fiber ($\lambda_{2-6}$=1000W/m·K) | 100.0 | 99.5 | 99.5 | 99.5 | 99.5 | 99.5 | 99.5 | 25.0 |
| PAN-based carbon fiber ($\lambda_{2-6}$=6.5W/m·K) | 100.0 | 99.5 | 99.3 | 99.0 | 98.8 | 98.5 | 98.2 | 25.0 |
| Glass fiber ($\lambda_{2-6}$=1.03W/m·K) | 100.0 | 99.6 | 98.1 | 96.6 | 95.1 | 93.7 | 92.2 | 25.0 |

As apparent from Tables 2 and 4, in a case where upper mold 3 located far from the source of heat is made of thermally conductive aluminum or carbon steel, the difference of temperatures is smaller in upper mold 3 and therefore the temperature on the surface of upper mold 3 decreases. Particularly in a case where the reinforcing-fiber base material is made of less thermally conductive PAN-based carbon fiber or glass fiber, the heat conduction from lower mold 2 becomes smaller and therefore the temperature on the surface of upper mold 3 decreases greatly.

However in a case where upper mold 3 is replaced by the one made of less thermally conductive resin, the heat transfer is limitedly performed inside upper mold 3 and therefore the difference of temperature is greater, so that the temperature decrease in each layer of the reinforcing-fiber base material can be reduced even if the reinforcing-fiber base material is made of less thermally conductive PAN-based carbon fiber or glass fiber.

According to the above-described calculation results, if upper mold 3 is made of thermally conductive material, it is likely in a real preform manufacturing apparatus that the heat transfer is progressively performed inside upper mold 3 and therefore it takes much time to increase the temperature of each layer of the reinforcing-fiber base material near upper mold 3. On the other hand, if upper mold 3 is made of less thermally conductive material, the heat transfer is limitedly performed inside upper mold 3 and therefore the temperature near upper mold 3 is prevented from decreasing, so that the temperature of each layer of the reinforcing-fiber base material is increased rapidly even if the reinforcing-fiber base material is made of less thermally conductive PAN-based carbon fiber.

Industrial Applications of the Invention

The manufacturing apparatus and manufacturing method of a preform according to the present invention is applicable to any use where preforms are required to be formed with a high accuracy as saving energy for the RTM forming method.

Explanation of symbols

1: preform manufacturing apparatus
2: lower mold as first mold
3: upper mold as second mold
4: forming mold
5: layered body of reinforcing-fiber base material
6: heating mechanism
7: cooling means
8: pressing mechanism
Q: heat transfer
l, $l_1$ - $l_7$: thickness
T, $T_1$ - $T_8$: temperature on contact face
$\lambda$, $\lambda_1$ - $\lambda_7$: thermal conductivity

**Claims**

1.   A manufacturing method of a preform to be used for an RTM forming, wherein

- a layered body (5) consisting of a plurality of layered reinforcing-fiber base materials to which a fixing agent consisting primarily of a thermoplastic resin is attached is pressed with a forming mold (4) consisting of a first mold (2) and a second mold (3) which are facing to each other so as to be formed into a predetermined shape
- as heated to melt the fixing agent interposed among the reinforcing-fiber base materials and then
- cooled to solidify the fixing agent to make the reinforcing-fiber base materials adhere to each other to maintain the formed shape, **characterized in that**
the heating is performed only from the first mold side, wherein the first mold (2) is made of
a metallic material, and a contact face of the second mold (3) contacting the reinforcing-fiber base material is made of a material which is less thermally conductive than the first mold (2) and is a nonmetallic material selected from the group consisting of epoxy resin, phenolic resin, Bakelite resin, PTFE resin, chemical wood, and heat-resistant board material having a thermal conductivity equal to or more than 0.01 W/m·K and equal to or less than 10 W/m·K and a thickness of at least 5 mm, so as to suppress the heat from being conducted to the second mold side and
wherein the second mold (3) is a split mold consisting of divided mold pieces.

2. The manufacturing method of preform according to claim 1, wherein the fixing agent has a glass transition temperature of 50 - 80°C.

3. The manufacturing method of preform according to claim 1 or 2, wherein the cooling is performed while the layered body is pressed.

4. The manufacturing method of preform according to any of claims 1 to 3, wherein the reinforcing-fiber base material is a carbon fiber base material.

**Patentansprüche**

1. Herstellungsverfahren eines Vorformlings zur Verwendung für ein RTM-Formen, wobei

- ein geschichteter Körper (5)
bestehend aus einer Mehrzahl von geschichteten Verstärkungsfaserbasismaterialien, mit welchen ein Befestigungsmittel, welches primär aus einem thermoplastischen Harz besteht, verbunden ist, mit einem Formwerkzeug (4), bestehend aus einer ersten Form (2) und einer zweiten Form (3), welche sich derart gegenüberliegen, dass eine vordefinierte Form ausgebildet wird, gepresst wird
- erhitzt wird, um das Befestigungsmittel, welches zwischen den Verstärkungsfasermaterialien zwischengelagert ist, zu schmelzen und dann
- abgekühlt wird, um das Befestigungsmittel zu erstarren, um die Verstärkungsfaserbasismaterialien aneinander zu haften, um die ausgebildete Form aufrecht zu erhalten, **dadurch gekennzeichnet, dass**

das Erhitzen nur von der ersten Formseite aus durchgeführt wird, wobei die erste Form (2) aus einem metallischen Material hergestellt ist, und eine Verbindungsfläche der zweiten Form (3), welche das Verstärkungsfasermaterial berührt, aus einem Material hergestellt ist, welches thermisch weniger leitfähig ist als die erste Form (2) und ein nichtmetallisches Material ausgewählt aus der Gruppe bestehend aus einem Epoxidharz, einem Phenolharz, einem Bakelitharz, einem PTFE-Harz, einem chemischen Holz, und einem wärmeresistenten Plattenmaterial mit einer Wärmeleitfähigkeit von mindestens 0,01 W/m·K und höchstens 10 W/m·K und einer Dicke von mindestens 5 mm ist, um die Wärmeleitung zur zweiten Formseite zu unterdrücken und wobei die zweite Form (3) eine geteilte Form ist, welche aus geteilten Formteilen besteht.

2. Herstellungsverfahren eines Vorformlings nach Anspruch 1, wobei das Befestigungsmittel eine Glasübergangstemperatur von 50 bis 80 °C aufweist.

3. Herstellungsverfahren eines Vorformlings nach Anspruch 1 oder 2, wobei das Abkühlen durchgeführt wird, während der geschichtete Körper gepresst wird.

4. Herstellungsverfahren eines Vorformlings nach einem der Ansprüche 1 bis 3, wobei das Verstärkungsfasermaterial ein Kohlenstofffaserbasismaterial ist.

**Revendications**

1. Procédé de fabrication d'une préforme à utiliser pour un formage RTM, dans lequel

    - un corps stratifié (5) constitué d'une pluralité de couches de substrat fibreux renforcé auxquelles un agent de fixation constitué principalement d'une résine thermoplastique a été appliqué, est pressé avec un moule de formage (4) constitué d'un premier moule (2) et d'un deuxième moule (3) qui se font face de manière à avoir une forme prédéterminée
    - en étant chauffé pour faire fondre l'agent de fixation interposé entre les couches de substrat fibreux renforcé, puis
    - en étant refroidi pour solidifier l'agent de fixation afin de faire adhérer les couches de substrat fibreux renforcé les unes aux autres pour maintenir la forme façonnée, **caractérisé en ce que**

    le chauffage est effectué uniquement du côté du premier moule, où le premier moule (2) est formé d'un matériau métallique, et une face de contact du deuxième moule (3) en contact avec le substrat fibreux renforcé est formée d'un matériau qui est moins thermiquement conducteur que celui du premier moule (2) et qui est un matériau non métallique choisi dans le groupe constitué d'une résine époxy, d'une résine phénolique, d'une résine bakélite, d'une résine PTFE, d'une pulpe chimique et d'un matériau de panneau résistant à la chaleur ayant une conductivité thermique supérieure ou égale à 0,01 W/m.K et inférieur ou égal à 10 W/m.K et une épaisseur d'au moins 5 mm, de manière à empêcher la chaleur d'être conduite vers le côté du deuxième moule et
    où le deuxième moule (3) est un moule à coins constitué de parties de moule divisées.

2. Procédé de fabrication d'une préforme selon la revendication 1, dans lequel l'agent de fixation a une température de transition vitreuse entre 50 et 80°C.

3. Procédé de fabrication d'une préforme selon la revendication 1 ou 2, dans lequel le refroidissement est effectué pendant que le corps stratifié est pressé.

4. Procédé de fabrication d'une préforme selon l'une des revendications 1 à 3, dans lequel le substrat fibreux renforcé est un substrat à base de fibres de carbone.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006123404 A
- JP 2006123402 A

- JP 2009119701 A

**Non-patent literature cited in the description**

- Basic chemical engineering. 1999